# EUROPEAN PATENT SPECIFICATION

(11) **EP 4 673 660 B1**
(45) Date of publication and mention of the grant of the patent: **11.11.2026**
(21) Application number: 23709131.9
(22) Date of filing: 28.02.2023
(51) Int. Cl.: F16C 33/10, F16C 17/14, F16C 17/02, F16C 17/24, F16C 32/06

(54) **BEARING FOR A PROPELLER SHAFT OF A SHIP, STERN TUBE BEARING ARRANGEMENT, PROPULSION ARRANGEMENT AND METHOD OF OPERATING A PROPULSION ARRANGEMENT**
LAGER FÜR EINE ANTRIEBSWELLE EINES SCHIFFES, HECKROHRLAGERANORDNUNG, ANTRIEBSANORDNUNG UND VERFAHREN ZUM BETRIEB EINER ANTRIEBSANORDNUNG
PALIER POUR UN ARBRE D'HÉLICE D'UN NAVIRE, AGENCEMENT DE PALIER DE TUBE D'ÉTAMBOT, AGENCEMENT DE PROPULSION ET PROCÉDÉ DE MISE EN OEUVRE D'UN AGENCEMENT DE PROPULSION

(43) Date of publication of application: 07.01.2026
(73) Proprietor: Wärtsilä Ibérica, S.A., 36475 Porriño (ES)
(72) Inventor: BLAZQUEZ, Ernesto, 36475 Porriño (ES); VAZQUEZ, Jose Antonio, 36475 Porriño (ES); PINEIRO, Aleixandre, 36475 Porriño (ES)
(74) Representative: Berggren Oy
(86) International application number: PCT/EP2023/054977
(87) International publication number: WO 2024/179664

(56) References cited:
- EP-A1- 0 105 050
- DE-U1- 9 116 286
- US-A- 6 056 509
- US-A1- 2003 123 765
- US-B2- 9 284 976

## Description

### Technical field of the invention

The present invention concerns a bearing for radially supporting a propeller shaft of a ship, as defined in claim 1, and as for example known from US 2003/123765 A1. The invention also concerns a stern tube bearing arrangement for a ship, a propulsion arrangement for a ship, and a method of operating a propulsion arrangement.

### Background of the invention

A typical propulsion system of a ship comprises a propeller that is connected by means of a propeller shaft to the crankshaft of the main engine of the ship. A propeller is attached to the propeller shaft. For allowing the propeller shaft to pass the hull of the ship, the ship is provided with a stern tube. A stern tube is a hollow tube arranged at the lower part of the stern of the ship. A stern tube bearing is arranged within the stern tube to radially support the propeller shaft. To avoid direct contact between the surfaces of the stern tube bearing and the propeller shaft, the stern tube bearings are lubricated. The stern tube bearings can be either water or oil lubricated.

The lubrication of an oil lubricated stern tube bearing can be based on the rotating movement of the propeller shaft. A typical conventional bearing comprises lubrication holes extending through the shell of the bearing. As the propeller shaft rotates, it creates a pumping effect drawing lubrication oil into the bearing and forming an oil film between the propeller shaft and the inner surface of the bearing.

While the conventional lubrication arrangements are simple and work adequately in many operating conditions, the lubrication is not always optimal. The load of the bearing is not uniform and varies depending on the operating conditions. Inadequate lubrication of the stern tube bearing can lead to excess wear or failure of the bearing.

### Summary of the invention

An object of the invention is to provide an improved bearing for radially supporting a propeller shaft of a ship. Other objects of the invention are to provide an improved stern tube bearing arrangement for a ship, a propulsion arrangement for a ship, and a method of operating a propulsion arrangement.

The bearing according to the invention is configured to be mounted within a stern tube of a ship and has, when mounted, a top, a bottom, a first side extending from the top to the bottom in a first circumferential direction of the bearing, and a second side extending from the top to the bottom in a second circumferential direction that is opposite to the first circumferential direction. The bearing comprises a plurality of lubrication holes extending from an outer surface of the bearing to an inner surface of the bearing for allowing flow of lubricating medium between said inner surface and said outer surface, said lubrication holes comprising a first group of lubrication holes opening onto the inner surface of the bearing on the first side of the bearing, and a second group of lubrication holes opening onto the inner surface of the bearing on the second side of the bearing. The bearing further comprises at least one lubrication inlet opening onto the inner surface of the bearing and configured to allow supply of lubricating medium onto said inner surface independently from said first group and said second group of lubrication holes.

The bearing according to the invention provides improved lubrication, which can be adjusted according to the need. The bearing can be arranged in an oil bath and the lubrication holes feed lubricating medium onto the inner surface of the bearing when the propeller shaft rotates. Via the lubrication inlet, additional lubricating medium can be fed onto an area where more lubrication is needed. The lubrication inlet also allows cooling of the lubricating medium and supply of cooler lubricating medium to a specific area of the bearing. The use of the lubrication inlet can be limited to certain operating conditions to minimize the energy consumption of the lubrication system.

According to an embodiment of the invention, said at least one lubrication inlet is arranged in a circumferential direction of the bearing at a distance from the lubrication holes of said first and second groups of lubrication holes. By arranging the lubrication inlet at a different height than the lubrication holes, it is easier to provide a separate lubrication channel for the lubrication inlet.

However, the lubrication inlet could also be arranged at the same height as the lubrication holes.

According to an embodiment of the invention, said at least one lubrication inlet comprises a first lubrication inlet arranged on the first side of the bearing. The propeller shaft exerts more load on the lower half of the bearing. When the lubrication inlet is arranged on one side of the bearing, in one rotation direction of the propeller shaft the lubrication inlet feeds additional lubrication oil onto the lower half of the bearing.

According to an embodiment of the invention, the first lubrication inlet opens on the inner surface of the bearing onto a recessed area. The recessed area around the lubrication inlet helps spreading the lubricating medium onto the inner surface of the bearing. It also reduces spreading of the lubricating medium outside of the recessed area in the axial direction of the bearing, thus concentrating more lubricating medium onto certain areas of the inner surface of the bearing.

According to an embodiment not part of the invention, the length of said recessed area in the axial direction of the bearing is at most 50 percent of the length of the inner surface of the bearing. This helps keeping the amount of the lubricating medium greater in certain areas of the inner surface of the bearing.

According to an embodiment not part of the invention, at least one of the lubrication holes of said first group of lubrication holes opens onto the same recessed area as said first lubrication inlet. This allows the lubrication hole to function as a pressure relief hole for the lubricating medium supplied via the first lubrication inlet, which helps avoiding excessive pressure on the inner surface of the bearing.

According to an embodiment not part of the invention, the first lubrication inlet opens on the inner surface of the bearing onto a first recessed area, the first side of the bearing is provided with a second recessed area that is separated from the first recessed area by a wall, and at least one of the lubrication holes of the first group of lubrication holes opens onto the second recessed area. The two separate recessed areas help keeping the amount of the lubricating medium greater in certain areas of the bearing.

According to an embodiment not part of the invention, the first lubrication inlet is arranged above the level of the lubrication holes of said first group of lubrication holes.

According to an embodiment of the invention, the bearing comprises a first lubricating medium supply hole opening onto an end surface of the bearing and a first lubrication channel connecting the first lubrication inlet to the first lubricating medium supply hole. This arrangement allow supplying lubricating medium to the first lubrication inlet via an end face of the bearing. The first lubrication channel can be either a groove on the outer surface of the bearing or an internal channel.

According to an embodiment of the invention, said at least one lubrication inlet comprises a second lubrication inlet, which coincides with the bottom of the bearing. By providing a lubrication inlet on the bottom part of the bearing, lubricating medium can be supplied below the propeller shaft. The lubricating medium supplied via the second lubrication inlet can be pressurized to exert a lifting force on the propeller shaft.

According to an embodiment not part of the invention, said second lubrication inlet opens on the inner surface of the bearing onto a recessed area. The recessed area around the second lubrication inlet facilitates spreading of the lubricating medium.

According to an embodiment of the invention, the bearing comprises a second lubricating medium supply hole opening onto an end surface of the bearing and a second lubrication channel connecting the second lubrication inlet to the second lubricating medium supply hole. This arrangement allow supplying lubricating medium to the second lubrication inlet via an end face of the bearing.

According to an embodiment of the invention, said at least one lubrication inlet is located from one end of the bearing at a distance that is 10-40 percent of the length of the bearing. Often the most loaded areas of the bearing are close to the ends of the bearing, and by arranging the lubrication inlet close to one end of the bearing, more lubricating medium can be supplied onto this area.

According to an embodiment of the invention, said lubrication inlet is located closer to the aft end of the bearing. The aft end of the bearing is often more loaded than the bow end, and it can thus be beneficial to supply more lubricating medium to the aft end. However, in some applications and in certain operating conditions the bow end can be more loaded, and the bearing could thus comprise a lubrication inlet at the bow end or at both the aft end and the bow end.

According to an embodiment of the invention, the lubrication of the first group of lubrication holes are arranged in the circumferential direction of the bearing at the same level with each other and the lubrication holes of the second group of lubrication holes are arranged in the circumferential direction of the bearing at the same level with each other. The lubrication holes thus facilitate uniform lubrication of the bearing, whereas the lubrication inlets can boost the lubrication in certain areas.

According to the invention, the lubrication holes of the first group of lubrication holes open on the outer surface of the bearing into a first groove having a longitudinal direction that is parallel to the axial direction of the bearing, and the lubrication holes of the second group of lubrication holes open on the outer surface of the bearing into a second groove having a longitudinal direction that is parallel to the axial direction of the bearing.

The stern tube bearing arrangement according to the invention comprises a stern tube and a bearing defined above arranged within the stern tube. The propulsion arrangement according to the invention comprises a stern tube arrangement defined above, a propeller shaft supported by the bearing, and a propeller attached to the propeller shaft.

According to an embodiment of the invention, the propulsion arrangement comprises means for supplying pressurized lubricating medium to said at least one lubrication inlet.

According to an embodiment of the invention, the propulsion arrangement comprises means for controlling the pressure and/or the amount of lubricating medium supplied to said at least one lubrication inlet. That allows optimizing the lubrication of the bearing in different operating conditions.

According to an embodiment not part of the invention, the propulsion arrangement comprises means for cooling down the lubricating medium supplied to said at least one lubrication inlet. The cooling means allows controlling the temperature of the most loaded areas of the bearing.

According to an embodiment not part of the invention, the propulsion arrangement comprises at least one of the following: a temperature sensor for monitoring the temperature of the lubricating medium in the stern tube, a sensor for monitoring the thickness of a lubricating medium film in the bearing, and a rotation speed sensor for monitoring the rotation speed of the propeller shaft. By monitoring different parameters, the lubrication of the bearing can be optimized in different operating conditions. The temperature sensor can be arranged to monitor the lubricating medium temperature in the bearing.

According to an embodiment not part of the invention, the propulsion arrangement comprises a control unit configured to control the supply of lubricating medium via said at least one lubrication inlet based on the temperature of the lubricating medium in the stern tube, the thickness of the lubricating film in the bearing, and/or the rotation speed of the propeller shaft.

The ship according to the invention comprises a propulsion arrangement defined above.

The method of operating a propulsion arrangement defined above comprises a step of introducing lubricating medium onto the inner surface of the bearing via said at least one lubrication inlet.

According to an embodiment of the invention, the method comprises at least one operating mode, where lubricating medium is introduced onto the inner surface of the bearing both via the lubrication holes and via said at least one lubrication inlet, and at least one operating mode, where lubricating medium is introduced onto the inner surface of the bearing solely via the lubrication holes. The lubrication of the bearing can thus be controlled according to the need, and lubricating medium is supplied via the lubrication inlet or inlets only when needed.

According to an embodiment not part of the invention, the bearing comprises a first lubrication inlet and a second lubrication inlet, and the method comprises at least one operating mode, where the lubricating medium is supplied both via the lubrication holes and the first lubrication and the second lubrication inlet, at least one operating mode where the lubricating medium is supplied solely via the lubrication holes and the first lubrication inlet, and at least one operating mode where the lubricating medium is supplied solely via the lubrication holes and the second lubrication inlet.

According to an embodiment not part of the invention, the lubricating medium is supplied via the second lubrication inlet at a higher pressure than via the first lubrication inlet. The higher pressure creates a lifting force that is exerted on the propeller shaft. The pressure of the lubricating medium supplied via the second lubrication inlet can be, for instance, at least 15 bars.

According to an embodiment not part of the invention, the lubricating medium supplied via the first lubrication inlet is cooled down before being supplied to the bearing. Cooling of the lubricating medium helps keeping the temperature of the lubricating medium in a desired range. By cooling the lubricating medium supplied via the first lubrication inlet, it is not necessary to cool down the highpressure lubricating medium supplied via the second lubrication inlet, thus avoiding a need for a heat exchanger withstanding high pressures.

According to an embodiment not part of the invention, the method comprises a step of monitoring at least one of the following parameters: the thickness of the lubricating medium film on the inner surface of the bearing, the rotation speed of the propeller shaft, and the temperature of the lubricating medium; and controlling the flow of lubricating medium via said at least one lubrication inlet based on the value of one or more of the monitored parameters. By monitoring one or more of the parameters, the lubrication of the bearing can be optimized in all operating conditions.

### Brief description of the drawings

Embodiments of the invention are described below in more detail with reference to the accompanying drawings, in which
Fig. 1 shows a perspective rear view of a bearing according to an embodiment of the invention,
Fig. 2 shows a perspective front view of the bearing of figure 1,
Fig. 3 shows schematically part of a ship and a propulsion arrangement according to an embodiment of the invention,
Fig. 4 shows schematically further details of a propulsion arrangement according to an embodiment of the invention, and
Fig. 5 shows as a block diagram a control system for a propulsion arrangement.

### Detailed description of embodiments of the invention

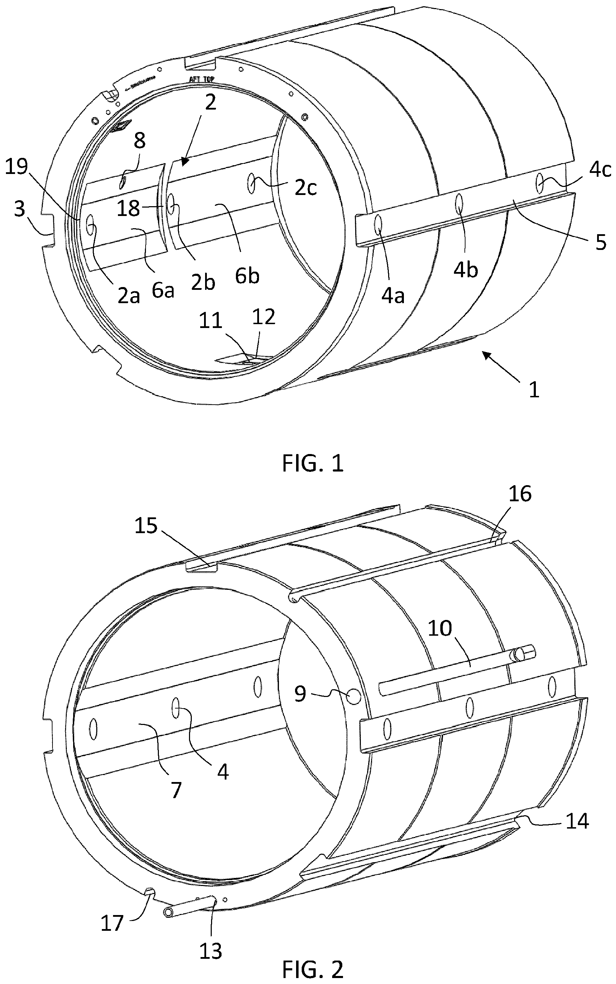

Figures 1 and 2 show a bearing 1 according to an embodiment of the invention. The bearing 1 can be used for supporting a propeller shaft of a ship in the radial direction of the propeller shaft. The term "propeller shaft" refers here to a shaft that connects a propeller of a ship to the crankshaft of the main engine of the ship. The main engine can be, for instance, a two-stroke piston engine, which can be driven in two rotation directions for allowing the ship to be propelled both in the forward direction and backward direction. The bearing 1 can be in particular a stern tube bearing. A stern tube is a hollow tube arranged at the lower part of the stern of the ship. The stern tube allows the propeller shaft to pass the hull of the ship.

The bearing 1 is configured to be mounted within the stern tube in a specific orientation. One of the end faces of the bearing 1 is configured to face backward and the other end face of the bearing 1 is configured to face forward. In the axial direction of the bearing 1, the bearing 1 has thus a forward end, i.e. a bow end, and a backward end, i.e. an aft end. Figure 1 shows the aft end of the bearing and figure 2 shows the bow end of the bearing 1. The bearing 1 is not rotationally symmetric, and it is thus configured to be mounted in a specific rotational orientation. When mounted, the bearing 1 has a top, bottom, first side and second side. The first side extends from the top to the bottom in a first circumferential direction of the bearing 1, and the second side extends from the top to the bottom in a second circumferential direction that is opposite to the first circumferential direction. In the embodiment of the figures, the first side of the bearing 1 is the port side of the bearing 1, i.e. the side located on the left hand side when seeing the bearing 1 from the aft of the ship, and the second side of the bearing 1 is the starboard side of the bearing 1, i.e. the right hand side of the bearing 1 when seeing the bearing 1 from the aft of the ship. In the embodiment of the figures, the rotation direction of the propeller shaft, as seen from the aft of the ship, is counter-clockwise when the propeller moves the ship forward. The first circumferential direction of the bearing 1 is thus the same as the rotation direction of the propeller shaft when the propeller moves the ship forward. The rotation direction of the propeller shaft is from the first side to the second side of the bearing 1 via the bottom of the bearing 1. When the propeller moves the ship forward, a point on the outer surface of the propeller shaft thus moves from the top to the bottom on the first side and then on the second side from the bottom to the top.

The bearing 1 has an outer surface, i.e. an outer circumferential surface and an inner surface, i.e. an inner circumferential surface. The inner surface is a bearing surface, against which the propeller shaft rotates. The shaft does not rotate directly against the bearing surface, but the bearing 1 is configured to allow supply of lubricating medium onto the inner surface of the bearing 1. The lubricating medium can be lubricating oil. The lubricating oil forms an oil film between the bearing surface and the propeller shaft. Direct contact between the surfaces of the bearing 1 and the propeller shaft is thus avoided and the friction between the surfaces is reduced.

In the embodiment of the figures, the bearing 1 is a one-piece part. However, the bearing 1 could also be made of two or more parts. For instance, the bearing 1 could be made of two or more pieces having a shape of a segment of a circle.

The bearing 1 comprises a plurality of lubrication holes 2a, 2b, 2c, 4a, 4b, 4c extending from the outer surface of the bearing 1 to the inner surface of the bearing 1. The lubrication holes 2a, 2b, 2c, 4a, 4b, 4c allow flow of the lubricating medium between the inner surface and the outer surface. The lubrication holes comprise a first group of lubrication holes 2 opening onto the inner surface of the bearing 1 on the first side of the bearing 1, and a second group of lubrication holes 4 opening onto the inner surface of the bearing 1 on the second side of the bearing 1. In the embodiment of the figures, the lubrication holes 2a, 2b, 2c of the first side and the lubrication holes 4a, 4b, 4c of the second side are arranged symmetrically about an imaginary vertical middle plane dividing the bearing 1 into the first side and the second side. The lubrication of the bearing 1 via the lubrication holes 2a, 2b, 2c, 4a, 4b, 4c thus functions substantially in the same way regardless of the rotation direction of the propeller shaft. However, it is not necessary to arrange the lubrication holes symmetrically about the middle plane.

In the embodiment of the figures, three lubrication holes 2a, 2b, 2c, 4a, 4b, 4c are arranged on each side of the bearing 1. However, the number of lubrication holes could also be different. Preferably, at least two lubrication holes 2a, 2b, 2c, 4a, 4b, 4c are arranged on each of the first side and the second side to distribute the lubricating medium over the whole bearing surface.

In the embodiment of the figures, the lubrication holes 2a, 2b, 2c of the first group of lubrication holes 2 are arranged in the circumferential direction of the bearing 1 at the same level with each other and the lubrication holes 4a, 4b, 4c of the second group of lubrication holes 4 are arranged in the circumferential direction of the bearing 1 at the same level with each other. However, the lubrication holes could also be arranged at different heights. In the embodiment of the figures, the lubrication holes 2a, 2b, 2c, 4a, 4b, 4c are arranged on both sides of the bearing 1 into a horizontal middle plane that divides the bearing 1 into a lower half and an upper half. However, the lubrication holes 2a, 2b, 2c, 4a, 4b, 4c could also be arranged above the horizontal middle plane. All the lubrication holes 2a, 2b, 2c, 4a, 4b, 4c could be at the same height. Alternatively, the lubrication holes 2a, 2b, 2c of the first side could be arranged higher than the lubrication holes 4a, 4b, 4c of the second side.

The lubrication holes 2a, 2b, 2c, 4a, 4b, 4c open on the inner surface of the bearing 1 onto recessed areas 6a, 6b, 7. The recessed areas 6a, 6b, 7 form oil pockets between the bearing surface 1 and the propeller shaft. The oil pockets facilitate spreading of the lubricating medium on the bearing surface. On the second side of the bearing, all the lubrication holes 4a, 4b, 4c open onto the same recessed area 7. The recessed area 7 on the second side of the bearing 1 extends in the axial direction of the bearing 1 over the whole bearing surface. In the circumferential direction of the bearing 1, the recessed area 7 extends over an angle of approximately 30 degrees. The recessed area 7 could extend, for instance, over an angle of 15-45 degrees. The recessed area 7 has in the circumferential direction of the bearing 1 on each side a transitional zone, where the depth of the recessed area 7 changes gradually.

On the first side of the bearing 1, the lubrication holes 2a, 2b, 2c open onto two separate recessed areas 6a, 6b. One of the lubrication holes 2a opens onto a first recessed area 6a and two of the lubrication holes 2b, 2c open onto a second recessed area 6b. In the circumferential direction the recessed areas 6a, 6b extend over the same angle as the recessed area 7 on the second side of the bearing 1.

The lubrication holes 2a, 2b, 2c of the first group of lubrication holes 2 open on the outer surface of the bearing 1 into a first groove 3 having a longitudinal direction that is parallel to the axial direction of the bearing 1. The first groove 3 thus supplies lubricating medium to the first group of lubrication holes 2 or collects lubricating medium from the first group of lubrication holes 2, depending on the flow direction. Similarly, the lubrication holes 4a, 4b, 4c of the second group of lubrication holes 4 open on the outer surface of the bearing 1 into a second groove 5 having a longitudinal direction that is parallel to the axial direction of the bearing 1. Both the first groove 3 and the second groove 5 extend to each end of the bearing 1, thus allowing flow of lubricating medium over the whole outer surface of the bearing 1 in the axial direction of the bearing 1. The bearing 1 can be mounted with a press-fit into the stern tube. Together with the stern tube, the first and second grooves 4, 5 define lubricating medium channels for the flow of lubricating medium. The outer surface of the bearing 1 is provided with further grooves 14, 15, 16, 17.

The bearing 1 according to the invention further comprises at least one lubrication inlet 8, 11 opening onto the inner surface of the bearing 1 and configured to allow supply of lubricating medium onto the inner surface of the bearing 1 independently from the first group and second group of lubrication holes 2, 4. The lubrication inlet 8, 11 thus provides an additional way of introducing lubricating medium onto the bearing surface. This allows increasing the amount of lubricating medium in an area where more lubrication is needed.

In the embodiment of the figures, the bearing 1 comprises a first lubrication inlet 8 arranged on the first side of the bearing 1. The bearing 1 further comprises a second lubrication inlet 11, which coincides with the bottom of the bearing 1. However, the bearing 1 could comprise only the first lubrication inlet 8 or only the second lubrication inlet 11. The bearing 1 could also comprise further lubrication inlets. The first and the second lubrication inlets 8, 11 are arranged in the circumferential direction of the bearing 1 at a distance from the lubrication holes 2a, 2b, 2c, 4a, 4b, 4c of the first and second groups of lubrication holes 2, 4. The first lubrication inlet 8 is arranged above the level of the lubrication holes 2a, 2b, 2c of the first group of lubrication holes 2. By arranging the first lubrication inlet 8 at a different height than the lubrication holes 2a, 2b, 2c, the first lubrication inlet 8 is not in fluid communication with the first groove 3 supplying lubricating medium to the first group of lubrication holes 2. However, by arranging the supply of lubricating medium to the first group of lubrication holes 2 and to the first lubrication inlet 8 in a different way, the first lubrication inlet 8 could also be arranged at the same height with the lubrication holes 2a, 2b, 2c of the first group of lubrication holes 2. The first lubrication inlet 8 could also be arranged below the level of the lubrication holes 2a, 2b, 2c of the first group of lubrication holes 2.

As discussed above, in the embodiment of the figures the rotation direction of the propeller shaft is from the first side of the bearing via the bottom to the second side. The bearing 1 can thus be lubricated effectively via the first lubrication inlet 8 when the propeller moves the ship forward. In most cases, a ship moves backwards only for short periods of time. Less strict requirements are thus set for the lubrication in the reverse running direction of the propeller shaft and a lubrication inlet 8 on the second side of the bearing 1 is not needed. However, a similar lubrication inlet 8 could be arranged also onto the second side.

In the embodiment of the figures, the first lubrication inlet 8 opens on the inner surface of the bearing 1 onto the first recessed area 6a of the first side of the bearing 1. One of the lubrication holes 2a, 2b, 2c thus opens onto the same recessed area 6a. The first recessed area 6a and the second recessed area 6b are separate from each other. There is a wall 18 between the two recessed areas 6a, 6b preventing direct flow between the recessed areas 6a, 6b. This ensures that the lubricating medium supplied via the first lubrication inlet 8 is not immediately spread over the whole bearing surface 1, but a major part of the lubricating medium remains at the area around the first lubrication inlet 8. In the embodiment of the figures, the length of the first recessed area 6a in the axial direction of the bearing 1 is approximately one third of the length of the inner surface of the bearing 1. The length of the first recessed area 6a is preferably at most 50 percent of the length of the bearing surface. The lubrication hole 2a opening onto the same recessed area 6a with the first lubrication inlet 18 functions as a pressure relief hole. The pressure relief hole helps avoiding excessive pressure on the inner surface of the bearing 1.

In the embodiment of the figures, the first lubrication inlet 8 is arranged closer to the aft end than the bow end of the bearing 1. In the embodiment of the figures, the distance of the first lubrication inlet 8 from the aft end is approximately 20 percent of the length of the bearing 1. The first lubrication inlet 8 could be located at a distance of 10-40 percent of the length of the bearing 1 from the aft end. The aft end is often more loaded than the bow end, and it is thus beneficial to arrange the first lubrication inlet closer to the aft end. However, in some operating conditions the bow end may be more loaded, and the first lubrication inlet 8 could thus also be arranged closer to the bow end. The bearing 1 could also be provided with lubrication inlets arranged both at the aft end and the bow end. Preferably, the supply of lubricating medium into the two lubrication inlets could be controlled independently of each other.

The first recessed area 6a does not extend to the end of the bearing surface, but a wall 19 is formed at the aft end of the first recessed area 6a. The wall 19 reduces escaping of lubricating medium from the recessed area 6a via the aft end of the bearing 1.

The bearing 1 comprises a first lubricating medium supply hole 9 opening onto an end surface of the bearing 1 and a first lubrication channel 10 connecting the first lubrication inlet 8 to the first lubricating medium supply hole 9. In the embodiment of the figures, the first lubrication channel 10 is a groove on the outer surface of the bearing 1 and the first lubricating medium supply hole 9 is arranged at the bow end of the bearing 1. However, the first lubrication channel 10 could also be arranged within the shell of the bearing 1 and/or the first lubricating medium supply hole 9 could be arranged at the aft end of the bearing 1. Lubricating medium could also be supplied to the first lubrication inlet 8 via a different arrangement, for instance via a pipe passing radially through the stern tube.

Also the second lubrication inlet 11 opens on the inner surface of the bearing 1 onto a recessed area 12. The recessed area 12 is not provided with any other holes than the second lubrication inlet 11.

The bearing 1 comprises a second lubricating medium supply hole 13 opening onto an end surface of the bearing 1 and a second lubrication channel connecting the second lubrication inlet 11 to the second lubricating medium supply hole 13. Also the second lubricating medium supply hole 13 is arranged at the bow end of the bearing 1, but it could also be arranged differently.

The second lubricating inlet 11 is arranged in the axial direction of the bearing approximately at a distance of 20 percent of the length of the bearing 1 from the aft end of the bearing 1. The distance could be, for instance, in the range of 10-40 percent of the length of the bearing 1.

As with the first lubrication inlet 8, by arranging the second lubrication inlet 11 close to the aft end of the bearing 1, the area that is typically most loaded can be provided with additional lubrication. The lubricating medium supplied via the second lubrication inlet 11 can be introduced onto the bearing surface at a higher pressure, exerting thus a lifting force on the propeller shaft.

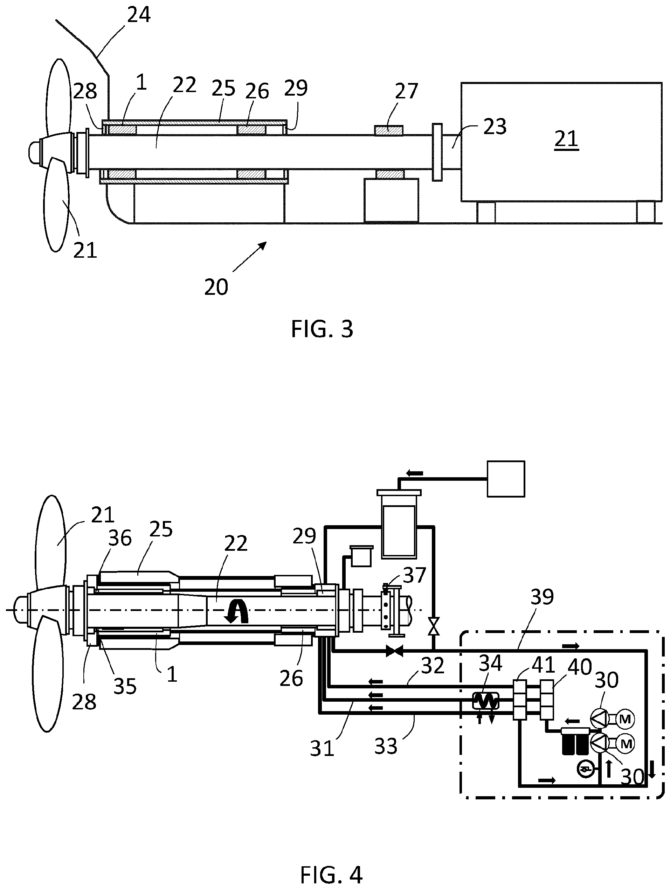

Figure 3 shows schematically a propulsion arrangement according to an embodiment of the invention and part of a ship 20. Figure 4 shows further details of the propulsion arrangement. The ship 20 is provided with a propeller 21. The propeller 21 is connected by means of a propeller shaft 22 to the crankshaft 23 of the main engine 21 of the ship 20. The main engine 21 can be, for instance, a two-stroke or a four-stroke piston engine. The propeller shaft 22 passes the hull 24 of the ship 20 in a stern tube 25. A bearing 1 according to the invention is arranged at the aft end of the stern tube 25 to support the propeller shaft 22. In the embodiment of figure 3, another stern tube bearing 26 is arranged at the bow end of the stern tube 25. The bearing 26 at the bow end of stern tube 25 can be similar to the bearing 1 at the aft end of the stern tube 25. The bearings 1, 26 can be mounted into the stern tube 25 by a press-fit. A further bearing 27 is arranged between the stern tube 25 and the main engine 21 to support the propeller shaft 22. The number of bearings supporting the propeller shaft 22 could be different. It is also possible that only one bearing is arranged in the stern tube 25 and other bearings supporting the propeller shaft are outside of the stern tube 25.

The stern tube 25 is filled with lubricating medium, such as lubricating oil, and as the propeller shaft 22 rotates, the lubricating medium can flow through the lubrication holes 2a, 2b, 2c, 4a, 4b, 4c of the bearing 1 and keep the bearing 1 lubricated. Each end of the stern tube 25 is provided with a sealing arrangement 28, 29. The purpose of the sealing arrangements 28, 29 is to prevent water from entering the stern tube 25 and to prevent the lubricating medium from escaping from the stern tube 25.

To improve the lubrication of the bearing 1, the propulsion arrangement is provided with lubrication pumps 30. In the embodiment of figure 4, two lubrication pumps 30 are provided for redundancy. If redundancy is not required, the propulsion arrangement can be provided with a single lubrication pump 30. Each of the lubrication pumps 30 is configured to supply lubricating medium to the bearing 1. The lubrication pumps 30 also supply lubricating medium to the sealing arrangements 28, 29, where the lubricating medium functions as sealing oil. However, a separate pump could be provided to supply the lubricating medium to the sealing arrangements 28, 29.

The propulsion arrangement comprises a first supply line 31 for supplying lubricating medium from the lubrication pumps 30 to the first lubrication inlet 8 of the bearing 1 and a second supply line 32 for supplying lubricating medium to the second lubrication inlet 11 of the bearing 1. A sealing medium supply line 33 is provided for supplying lubricating medium to the sealing arrangements 28, 29. A distribution block 40 and a pressure control block 41 are arranged between the lubrication pumps 30 and the stern tube 25. The distribution block 40 functions as flow control means for controlling the amount of the lubricating medium supplied to the bearing 1 and to the sealing arrangements 28, 29. The pressure control block 41 functions as pressure control means for controlling the pressure of the lubricating medium supplied to the bearing 1 and to the sealing arrangements 28, 29.

The two separate supply lines 30, 31 and the flow control means 40 allow independent control of the amount of lubricating medium supplied via the first lubrication inlet 8 and the second lubrication inlet 11. The two separate supply lines 30, 31 and the pressure control means 41 allow independent control of the pressure of lubricating medium supplied via the first lubrication inlet 8 and the second lubrication inlet 11.

The arrangement is further provided with a return line 39 that is configured to supply excess lubricating medium from the stern tube 25 back to the lubrication pumps 30. A heat exchanger 34 is arranged in the first supply line 31. The heat exchanger 34 is configured to cool down the lubricating medium supplied via the first lubrication inlet 8. The heat exchanger 34 allows controlling of the temperature of the bearing 1 arranged at the aft end of the stern tube 25.

The pressure control means 41 can be configured to supply lubricating medium to the second lubrication inlet 11 at a higher pressure than to the first lubrication inlet 8. The pressure of the lubricating medium supplied via the first lubrication inlet 8 can be, for instance, in the range of 1-5 bars, more preferably 1-3 bars. The pressure of the lubricating medium supplied via the second lubrication inlet 11 can be, for instance, in the range of 15-30 bars. However, the pressure of the lubricating medium supplied via the lubrication inlets 8, 11 may be above the ranges mentioned above for short periods of time. For instance, when lubricating medium supply via the second lubrication inlet 11 is started, an impact pressure may be as high as 60-70 bars, from which the pressure quickly drops to the above-mentioned range of 15-30 bars.

The propulsion arrangement of figures 3 and 4 further comprises a rotation speed sensor 37 that is configured to monitor the rotation speed of the propeller shaft 22. The arrangement also comprises a temperature sensor 35 that is configured to monitor the temperature of the lubricating medium in the bearing 1. The arrangement further comprises an oil film thickness sensor 36 for monitoring the thickness of the lubricating medium film on the bearing surface of the bearing 1.

The amount and pressure of lubricating medium supplied to the bearing 1 could be controlled in many alternative ways. For instance, the propulsion arrangement could be provided with separate pumps for supplying lubricating medium to the first lubrication inlet 8 and the second lubrication inlet 11. Also, the amount and/or pressure of the lubricating medium could be controlled by means of the lubrication pumps 30, in which case separate flow control means and/or pressure control means are not needed.

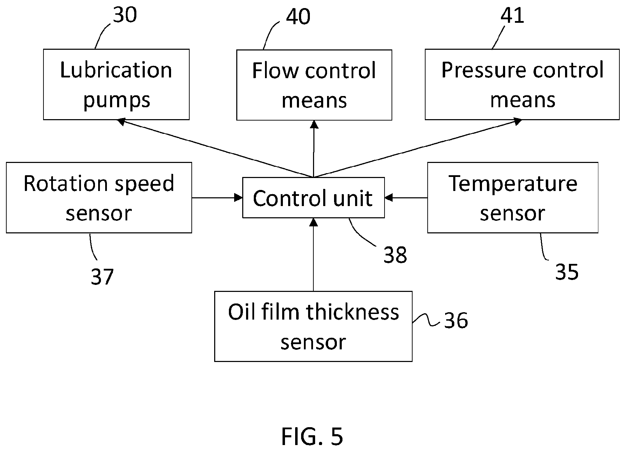

The lubrication of the bearing 1 can be controlled based on the operating conditions of the propulsion arrangement. Figure 5 shows as a block diagram a control system for the propulsion arrangement. The control system comprises a control unit 38 that is configured to control the operation of the lubrication pumps 30. The control unit 38 also controls the operation of the distribution block 40 and the pressure control block 41 to control the flow rate and pressure of the lubricating medium. The control system is provided with a temperature sensor 35 that is configured to monitor the temperature of the lubricating medium. The temperature sensor 35 can be arranged in the bearing 1 or within the stern tube 25. The control system could comprise two or more temperature sensors arranged in different locations. Preferably at least one temperature sensor 35 is arranged substantially in the middle of the bearing 1 in the axial direction of the bearing 1. The control system is further provided with at least one sensor 36 for monitoring the thickness of the lubricating medium film on the bearing surface of the bearing 1. The oil film thickness sensor 36 may be arranged at the aft end of the bearing 1. That allows monitoring oil film thickness at the aft end of the bearing 1. This is beneficial especially in cases where the first lubrication inlet 8 and/or the second lubrication inlet 11 is arranged close to the aft end of the bearing 1, as the oil film thickness can be monitored in the area into which the lubricating medium is supplied via the lubrication inlets 8, 11. The control system is further provided with a rotation speed sensor 37 that is configured to monitor the rotation speed of the propeller shaft 22. The control unit 38 receives measurement data from the temperature sensor 35, oil film thickness sensor 36 and rotation speed sensor 37. Instead of the rotation speed sensor 37, the control unit 38 could receive rotation speed data from the engine 21. The functions of the sensors 35, 36, 37 could also be integrated into one or more multi-function sensors configured to monitor two or more different parameters.

The control unit 38 is configured to control the operation of the lubrication pumps 30, the flow control means 40 and the pressure control means 41 based on the temperature of the lubricating medium, thickness of the lubricating medium film and/or the rotation speed of the propeller shaft 22.

The propulsion arrangement can be operated in different operating modes depending on the values of different control parameters, such as the lubricating medium temperature, thickness of the oil film and the rotation speed of the propeller shaft 22. For selecting the operating mode, the lubricating medium temperature and/or the thickness of the lubricating medium film can be compared to respective target ranges or one or more threshold values. In addition, the rotation speed of the propeller shaft 22 can be compared to one or more threshold values.

According to an embodiment of the invention, the propulsion arrangement can be operated in at least four different operating modes. As the stern tube 25 is filled with lubricating medium, in all operating modes at least part of the lubricating medium flows via the lubrication holes 2a, 2b, 2c, 4a, 4b, 4c of the bearing 1. In a first operating mode, lubricating medium is additionally supplied via the first lubrication inlet 8. In a second operating mode, the lubricating medium is supplied via the second lubrication inlet 11. In a third operating mode, lubricating medium is supplied via both the first lubrication inlet 8 and the second lubrication inlet 11. In a fourth operating mode, lubricating mode is supplied solely via the lubrication holes 2a, 2b, 2c, 4a, 4b, 4c.

The first operating mode is a normal operating mode that can be used in most operating conditions.

The second operating mode can be used in particular when the rotation speed of the propeller shaft 22 is low, for instance below a threshold value. The second operating mode is also beneficial when the temperature of the lubricating medium is low, for instance below a target range or below a first threshold value and the thickness of the lubricating medium film is small, for instance below a first threshold value.

The third operating mode can be used when the temperature of the lubricating medium is high, for instance above the target range or above a second threshold value, and the thickness of the lubricating medium film is small, for instance below the first threshold value.

The fourth operating mode can be used when the temperature of the lubricating medium is relatively low, for instance below a second threshold value and the thickness of the lubricating medium is in a desired range or above the first threshold value or a second threshold value. The fourth operating mode also functions as an emergency mode that is used if the lubrication pumps 30 fail and the other operating modes are not available.

As an example, a target range is determined for the temperature of the lubricating medium. The lower limit of the target range could be, for instance, 20 °C. The upper limit of the target range could be, for instance, 50 °C. In addition, a threshold value could be determined for the temperature of the lubricating medium. The threshold value could be within the target range. As an example, the threshold value could be 45°C.

A threshold value can be determined for the rotation speed of the propeller shaft 22. The threshold value can be a certain percentage of the maximum continuous rate of the propeller shaft 22, i.e. of the nominal rotation speed of the propeller shaft 22. As an example, the threshold value could be 25 percent of the nominal speed.

A first threshold value can be determined for the thickness of the lubricating medium film. As an example, the first threshold value could be 50 µm. Also a second threshold value could be determined for the thickness of the lubricating medium film. The second threshold value could be greater than the first threshold value, for example 60 µm.

The operating mode can be selected by comparing the monitored parameters to respective target ranges or threshold values. The first operating mode provides cooling of the lubricating medium. The second operating mode provides a damping effect and support for the propeller shaft 22. The third operating mode provides both the cooling and damping and support. The fourth operating mode provides energy saving.

The first operating mode can be used when the rotation speed of the propeller shaft 22 is above the respective threshold value, the thickness of the lubricating medium film is above the respective first threshold value and the temperature of the lubricating medium is within the respective target range or above the target range.

The second operating mode can be used when the rotation speed of the propeller shaft 22 is below the respective threshold value and/or the thickness of the lubricating medium is below the respective first threshold value and the temperature of the lubricating medium is below the respective target range.

The third operating mode can be used when the temperature of the lubricating medium is above the respective target range and the thickness of the lubricating medium film is below the respective first threshold value.

The fourth operating mode can be used when the thickness of the lubricating medium film is above the respective second threshold value and the temperature of the lubricating medium is below the respective second threshold value.

In the operating modes comprising supply of lubricating medium via the first and/or second lubrication inlets 8, 11, the pressure and/or the flow rate of the lubricating medium can be adjusted to meet the lubrication needs even more precisely. Also, the temperature of the lubricating medium supplied via the first lubrication inlet 8 could be controlled, for instance by providing the first supply line 31 between the lubrication pumps 30 and the bearing 1 with a by-pass line allowing by-passing of the heat exchanger 34. Alternatively, or in addition, the flow rate and/or the temperature of heat exchange medium flowing through the heat exchanger 34 could be controlled to control the temperature of the lubricating medium.

## Claims

1. A bearing (1) for radially supporting a propeller shaft (22) of a ship (20), the bearing (1) being configured to be mounted within a stern tube (25) of a ship (20) and having, when mounted within a stern tube (25) of a ship (20),
- a top,
- a bottom,
- a first side extending from the top to the bottom in a first circumferential direction of the bearing (1), and
- a second side extending from the top to the bottom in a second circumferential direction that is opposite to the first circumferential direction,
the bearing (1) comprising a plurality of lubrication holes (2a, 2b, 2c, 4a, 4b, 4c) extending from an outer surface of the bearing (1) to an inner surface of the bearing (1) for allowing flow of lubricating medium between said inner surface and said outer surface, said lubrication holes (2a, 2b, 2c, 4a, 4b, 4c) comprising a first group of lubrication holes (2) opening onto the inner surface of the bearing (1) on the first side of the bearing (1), and a second group of lubrication holes (4) opening onto the inner surface of the bearing (1) on the second side of the bearing (1),
**characterized in that** the lubrication holes (2a, 2b, 2c) of the first group of lubrication holes (2) open on the outer surface of the bearing (1) into a first groove (3) having a longitudinal direction that is parallel to the axial direction of the bearing (1), and the lubrication holes (4a, 4b, 4c) of the second group of lubrication holes (4) open on the outer surface of the bearing (1) into a second groove (5) having a longitudinal direction that is parallel to the axial direction of the bearing (1), and the bearing (1) further comprises at least one lubrication inlet (8, 11) opening onto the inner surface of the bearing (1) and configured to allow supply of lubricating medium onto said inner surface independently from said first group and said second group of lubrication holes (2, 4).

2. A bearing (1) according to claim 1, wherein said at least one lubrication inlet (8, 11) is arranged in a circumferential direction of the bearing (1) at a distance from the lubrication holes (2a, 2b, 2c, 4a, 4b, 4c) of said first and second groups of lubrication holes (2, 4).

3. A bearing (1) according to claim 1 or 2, wherein said at least one lubrication inlet (8, 11) comprises a first lubrication inlet (8) arranged on the first side of the bearing (1).

4. A bearing (1) according to claim 3, wherein the first lubrication inlet (8) opens on the inner surface of the bearing (1) onto a recessed area (6a).

5. A bearing (1) according to claim 3 or 4, wherein the bearing (1) comprises a first lubricating medium supply hole (9) opening onto an end surface of the bearing (1) and a first lubrication channel (10) connecting the first lubrication inlet (8) to the first lubricating medium supply hole (9).

6. A bearing (1) according to any of the preceding claims, wherein said at least one lubrication inlet (8, 11) comprises a second lubrication inlet (11), which coincides with the bottom of the bearing (1).

7. A bearing (1) according to claim 6, wherein the bearing (1) comprises a second lubricating medium supply hole (13) opening onto an end surface of the bearing (1) and a second lubrication channel connecting the second lubrication inlet (11) to the second lubricating medium supply hole (13).

8. A bearing (1) according to any of the preceding claims, wherein said at least one lubrication inlet (8, 11) is located from one end of the bearing (1) at a distance that is 10-40 percent of the length of the bearing (1) and located closer to the aft end of the bearing (1) when the bearing (1) is mounted within a stern tube (25) of a ship (20).

9. A bearing (1) according to any of the preceding claims, wherein the lubrication holes (2a, 2b, 2c) of the first group of lubrication holes (2) are arranged in the circumferential direction of the bearing (1) at the same level with each other and the lubrication holes (4a, 4b, 4c) of the second group of lubrication holes (4) are arranged in the circumferential direction of the bearing (1) at the same level with each other.

10. A stern tube bearing arrangement for a ship (20), the arrangement comprising a stern tube (25) and a bearing (1) according to any of the preceding claims arranged within the stern tube (25).

11. A propulsion arrangement for a ship (20), the propulsion arrangement comprising a stern tube arrangement according to claim 10, a propeller shaft (22) supported by the bearing (1), and a propeller (21) attached to the propeller shaft (22).

12. A propulsion arrangement according to claim 11, wherein the arrangement comprises means (30, 31, 32) for supplying pressurized lubricating medium to said at least one lubrication inlet (8, 11) and means (40, 41) for controlling the pressure and/or the amount of lubricating medium supplied to said at least one lubrication inlet (8, 11).

13. A ship (20) comprising a propulsion arrangement according to claim 11 or 12.

14. A method of operating a propulsion arrangement according to any of claims 11 or 12, wherein the method comprises a step of introducing lubricating medium onto the inner surface of the bearing (1) via said at least one lubrication inlet (8, 11).

15. A method according to claim 14, wherein the method comprises at least one operating mode, where lubricating medium is introduced onto the inner surface of the bearing (1) both via the lubrication holes (2a, 2b, 2c, 4a, 4b, 4c) and via said at least one lubrication inlet (8, 11), and at least one operating mode, where lubricating medium is introduced onto the inner surface of the bearing (1) solely via the lubrication holes (2a, 2b, 2c, 4a, 4b, 4c).

## Patentansprüche

1. Ein Lager (1) zum radialen Abstützen einer Propellerwelle (22) eines Schiffes (20), wobei das Lager (1) dazu ausgelegt ist, innerhalb eines Heckrohrs (25) eines Schiffes (20) montiert zu werden, und, wenn es innerhalb eines Heckrohrs (25) eines Schiffes (20) montiert ist, Folgendes aufweist:
- eine Oberseite,
- eine Unterseite,
- eine erste Seite, die sich von der Oberseite zu der Unterseite in einer ersten Umfangsrichtung des Lagers (1) erstreckt, und
- eine zweite Seite, die sich von der Oberseite zu der Unterseite in einer zweiten Umfangsrichtung erstreckt, die der ersten Umfangsrichtung entgegengesetzt ist,
wobei das Lager (1) eine Vielzahl von Schmierbohrungen (2a, 2b, 2c, 4a, 4b, 4c) umfasst, die sich von einer Außenfläche des Lagers (1) zu einer Innenfläche des Lagers (1) erstrecken, um ein Strömen von Schmiermedium zwischen der Innenfläche und der Außenfläche zu ermöglichen, wobei die Schmierbohrungen (2a, 2b, 2c, 4a, 4b, 4c) eine erste Gruppe von Schmierbohrungen (2), die auf der ersten Seite des Lagers (1) in die Innenfläche des Lagers (1) münden, und eine zweite Gruppe von Schmierbohrungen (4), die auf der zweiten Seite des Lagers (1) in die Innenfläche des Lagers (1) münden, umfassen,
**dadurch gekennzeichnet, dass** die Schmierbohrungen (2a, 2b, 2c) der ersten Gruppe von Schmierbohrungen (2) an der Außenfläche des Lagers (1) in eine erste Nut (3) münden, die eine Längsrichtung aufweist, die parallel zu der Axialrichtung des Lagers (1) ist, und die Schmierbohrungen (4a, 4b, 4c) der zweiten Gruppe von Schmierbohrungen (4) an der Außenfläche des Lagers (1) in eine zweite Nut (5) münden, die eine Längsrichtung aufweist, die parallel zu der Axialrichtung des Lagers (1) ist, und das Lager (1) ferner mindestens einen Schmiermitteleinlass (8, 11) umfasst, der in die Innenfläche des Lagers (1) mündet und dazu ausgelegt ist, eine Zufuhr von Schmiermedium auf die Innenfläche unabhängig von der ersten Gruppe und der zweiten Gruppe von Schmierbohrungen (2, 4) zu ermöglichen.

2. Ein Lager (1) nach Anspruch 1, wobei der mindestens eine Schmiermitteleinlass (8, 11) in einer Umfangsrichtung des Lagers (1) in einem Abstand von den Schmierbohrungen (2a, 2b, 2c, 4a, 4b, 4c) der ersten und zweiten Gruppe von Schmierbohrungen (2, 4) angeordnet ist.

3. Ein Lager (1) nach Anspruch 1 oder 2, wobei der mindestens eine Schmiermitteleinlass (8, 11) einen ersten Schmiermitteleinlass (8) umfasst, der auf der ersten Seite des Lagers (1) angeordnet ist.

4. Ein Lager (1) nach Anspruch 3, wobei der erste Schmiermitteleinlass (8) an der Innenfläche des Lagers (1) in einen vertieften Bereich (6a) mündet.

5. Ein Lager (1) nach Anspruch 3 oder 4, wobei das Lager (1) eine erste Schmiermediumzufuhrbohrung (9), die in eine Stirnfläche des Lagers (1) mündet, und einen ersten Schmierkanal (10), der den ersten Schmiermitteleinlass (8) mit der ersten Schmiermediumzufuhrbohrung (9) verbindet, umfasst.

6. Ein Lager (1) nach einem der vorhergehenden Ansprüche, wobei der mindestens eine Schmiermitteleinlass (8, 11) einen zweiten Schmiermitteleinlass (11) umfasst, der mit der Unterseite des Lagers (1) zusammenfällt.

7. Ein Lager (1) nach Anspruch 6, wobei das Lager (1) eine zweite Schmiermediumzufuhrbohrung (13), die in eine Stirnfläche des Lagers (1) mündet, und einen zweiten Schmierkanal, der den zweiten Schmiermitteleinlass (11) mit der zweiten Schmiermediumzufuhrbohrung (13) verbindet, umfasst.

8. Ein Lager (1) nach einem der vorhergehenden Ansprüche, wobei der mindestens eine Schmiermitteleinlass (8, 11) von einem Ende des Lagers (1) in einem Abstand angeordnet ist, der 10-40 Prozent der Länge des Lagers (1) beträgt, und näher an dem achteren Ende des Lagers (1) angeordnet ist, wenn das Lager (1) innerhalb eines Heckrohrs (25) eines Schiffes (20) montiert ist.

9. Ein Lager (1) nach einem der vorhergehenden Ansprüche, wobei die Schmierbohrungen (2a, 2b, 2c) der ersten Gruppe von Schmierbohrungen (2) in der Umfangsrichtung des Lagers (1) auf gleicher Höhe zueinander angeordnet sind und die Schmierbohrungen (4a, 4b, 4c) der zweiten Gruppe von Schmierbohrungen (4) in der Umfangsrichtung des Lagers (1) auf gleicher Höhe zueinander angeordnet sind.

10. Eine Heckrohrlageranordnung für ein Schiff (20), wobei die Anordnung ein Heckrohr (25) und ein innerhalb des Heckrohrs (25) angeordnetes Lager (1) nach einem der vorhergehenden Ansprüche umfasst.

11. Eine Antriebsanordnung für ein Schiff (20), wobei die Antriebsanordnung eine Heckrohranordnung nach Anspruch 10, eine durch das Lager (1) abgestützte Propellerwelle (22) und einen an der Propellerwelle (22) befestigten Propeller (21) umfasst.

12. Eine Antriebsanordnung nach Anspruch 11, wobei die Anordnung Mittel (30, 31, 32) zum Zuführen von unter Druck stehendem Schmiermedium zu dem mindestens einen Schmiermitteleinlass (8, 11) und Mittel (40, 41) zum Steuern des Drucks und/oder der Menge des dem mindestens einen Schmiermitteleinlass (8, 11) zugeführten Schmiermediums umfasst.

13. Ein Schiff (20), umfassend eine Antriebsanordnung nach Anspruch 11 oder 12.

14. Ein Verfahren zum Betrieb einer Antriebsanordnung nach einem der Ansprüche 11 oder 12, wobei das Verfahren einen Schritt des Einbringens von Schmiermedium auf die Innenfläche des Lagers (1) über den mindestens einen Schmiermitteleinlass (8, 11) umfasst.

15. Ein Verfahren nach Anspruch 14, wobei das Verfahren mindestens einen Betriebsmodus umfasst, in dem Schmiermedium sowohl über die Schmierbohrungen (2a, 2b, 2c, 4a, 4b, 4c) als auch über den mindestens einen Schmiermitteleinlass (8, 11) auf die Innenfläche des Lagers (1) eingebracht wird, und mindestens einen Betriebsmodus, in dem Schmiermedium ausschließlich über die Schmierbohrungen (2a, 2b, 2c, 4a, 4b, 4c) auf die Innenfläche des Lagers (1) eingebracht wird.

## Revendications

1. Un palier (1) destiné à supporter radialement un arbre d'hélice (22) d'un navire (20), le palier (1) étant configuré pour être monté à l'intérieur d'un tube d'étambot (25) d'un navire (20) et présentant, lorsqu'il est monté à l'intérieur d'un tube d'étambot (25) d'un navire (20) :
- une partie supérieure ;
- une partie inférieure ;
- un premier côté s'étendant de la partie supérieure à la partie inférieure dans une première direction circonférentielle du palier (1) ; et
- un second côté s'étendant de la partie supérieure à la partie inférieure dans une seconde direction circonférentielle opposée à la première direction circonférentielle,
le palier (1) comprenant une pluralité de trous de lubrification (2a, 2b, 2c, 4a, 4b, 4c) s'étendant d'une surface extérieure du palier (1) à une surface intérieure du palier (1) pour permettre un écoulement d'agent lubrifiant entre ladite surface intérieure et ladite surface extérieure, lesdits trous de lubrification (2a, 2b, 2c, 4a, 4b, 4c) comprenant un premier groupe de trous de lubrification (2) débouchant sur la surface intérieure du palier (1) sur le premier côté du palier (1), et un second groupe de trous de lubrification (4) débouchant sur la surface intérieure du palier (1) sur le second côté du palier (1),
**caractérisé en ce que** les trous de lubrification (2a, 2b, 2c) du premier groupe de trous de lubrification (2) débouchent, sur la surface extérieure du palier (1), dans une première rainure (3) ayant une direction longitudinale parallèle à la direction axiale du palier (1), et les trous de lubrification (4a, 4b, 4c) du second groupe de trous de lubrification (4) débouchent, sur la surface extérieure du palier (1), dans une seconde rainure (5) ayant une direction longitudinale parallèle à la direction axiale du palier (1), et le palier (1) comprend en outre au moins une entrée de lubrification (8, 11) débouchant sur la surface intérieure du palier (1) et configurée pour permettre l'alimentation en agent lubrifiant sur ladite surface intérieure indépendamment dudit premier groupe et dudit second groupe de trous de lubrification (2, 4).

2. Un palier (1) selon la revendication 1, dans lequel ladite au moins une entrée de lubrification (8, 11) est disposée, dans une direction circonférentielle du palier (1), à distance des trous de lubrification (2a, 2b, 2c, 4a, 4b, 4c) desdits premier et second groupes de trous de lubrification (2, 4).

3. Un palier (1) selon la revendication 1 ou 2, dans lequel ladite au moins une entrée de lubrification (8, 11) comprend une première entrée de lubrification (8) disposée sur le premier côté du palier (1).

4. Un palier (1) selon la revendication 3, dans lequel la première entrée de lubrification (8) débouche, sur la surface intérieure du palier (1), sur une zone en retrait (6a).

5. Un palier (1) selon la revendication 3 ou 4, dans lequel le palier (1) comprend un premier trou d'alimentation en agent lubrifiant (9) débouchant sur une surface d'extrémité du palier (1) et un premier canal de lubrification (10) reliant la première entrée de lubrification (8) au premier trou d'alimentation en agent lubrifiant (9).

6. Un palier (1) selon l'une quelconque des revendications précédentes, dans lequel ladite au moins une entrée de lubrification (8, 11) comprend une seconde entrée de lubrification (11), qui coïncide avec la partie inférieure du palier (1).

7. Un palier (1) selon la revendication 6, dans lequel le palier (1) comprend un second trou d'alimentation en agent lubrifiant (13) débouchant sur une surface d'extrémité du palier (1) et un second canal de lubrification reliant la seconde entrée de lubrification (11) au second trou d'alimentation en agent lubrifiant (13).

8. Un palier (1) selon l'une quelconque des revendications précédentes, dans lequel ladite au moins une entrée de lubrification (8, 11) est située, par rapport à une extrémité du palier (1), à une distance qui représente 10-40 pour cent de la longueur du palier (1), et est située plus près de l'extrémité arrière du palier (1) lorsque le palier (1) est monté à l'intérieur d'un tube d'étambot (25) d'un navire (20).

9. Un palier (1) selon l'une quelconque des revendications précédentes, dans lequel les trous de lubrification (2a, 2b, 2c) du premier groupe de trous de lubrification (2) sont disposés, dans la direction circonférentielle du palier (1), au même niveau les uns que les autres, et les trous de lubrification (4a, 4b, 4c) du second groupe de trous de lubrification (4) sont disposés, dans la direction circonférentielle du palier (1), au même niveau les uns que les autres.

10. Un agencement de palier de tube d'étambot pour un navire (20), l'agencement comprenant un tube d'étambot (25) et un palier (1) selon l'une quelconque des revendications précédentes, disposé à l'intérieur du tube d'étambot (25).

11. Un agencement de propulsion pour un navire (20), l'agencement de propulsion comprenant un agencement de tube d'étambot selon la revendication 10, un arbre d'hélice (22) supporté par le palier (1), et une hélice (21) fixée à l'arbre d'hélice (22).

12. Un agencement de propulsion selon la revendication 11, dans lequel l'agencement comprend des moyens (30, 31, 32) pour alimenter ladite au moins une entrée de lubrification (8, 11) en agent lubrifiant sous pression et des moyens (40, 41) pour commander la pression et/ou la quantité d'agent lubrifiant alimentant ladite au moins une entrée de lubrification (8, 11).

13. Un navire (20) comprenant un agencement de propulsion selon la revendication 11 ou 12.

14. Un procédé de mise en œuvre d'un agencement de propulsion selon l'une quelconque des revendications 11 ou 12, dans lequel le procédé comprend une étape d'introduction d'agent lubrifiant sur la surface intérieure du palier (1) par l'intermédiaire de ladite au moins une entrée de lubrification (8, 11).

15. Un procédé selon la revendication 14, dans lequel le procédé comprend au moins un mode de fonctionnement dans lequel d'agent lubrifiant est introduit sur la surface intérieure du palier (1) à la fois par l'intermédiaire des trous de lubrification (2a, 2b, 2c, 4a, 4b, 4c) et par l'intermédiaire de ladite au moins une entrée de lubrification (8, 11), et au moins un mode de fonctionnement dans lequel d'agent lubrifiant est introduit sur la surface intérieure du palier (1) uniquement par l'intermédiaire des trous de lubrification (2a, 2b, 2c, 4a, 4b, 4c).
